# EUROPÄISCHE PATENTANMELDUNG

(11) **EP 2 484 937 A1**
(43) Veröffentlichungstag der Anmeldung: **08.08.2012**
(21) Anmeldenummer: 11190462.9
(22) Anmeldetag: 24.11.2011
(51) Int. Cl.: F16H 25/24, B23Q 5/40

(54) **Spindelantrieb**

(30) Priorität: 07.02.2011 DE 102011003698
(71) Anmelder: Schaeffler Technologies AG & Co. KG, 91074 Herzogenaurach (DE)
(72) Erfinder: Schmidt, Roland, 66292 Riegelsberg (DE)

(57) **Zusammenfassung**

Die Erfindung betrifft einen Spindelantrieb, umfassend eine drehantreibbare Gewindespindel (2), einen mittels der Gewindespindel entlang einer Führungsschiene (4) verstellbaren Laufwagen (6), sowie mehrere in Richtung der Spindelachse vor und hinter dem Laufwagen (6) angeordnete Führungswagen (10, 12) zum Abstützen der Gewindespindel, wobei die bei einer Zustellbewegung des Laufwagens (6) vor diesem angeordneten Führungswagen (10, 12) durch den Laufwagen nacheinander zusammengeschoben und zu einem Spindelende hin bewegt werden, und wobei die hinter dem Laufwagen angeordneten Führungswagen über einen Kopplungsmechanismus nachgeschleppt und in eine zugeordnete Abstützposition bewegt werden.

An den Führungswagen (10, 12) und am Laufwagen (6) sind miteinander zusammenwirkende, durch an der Führungsschiene (4) fest angeordnete Schaltmittel (13) betätigbare Kopplungsmittel vorgesehen, mittels derer die vor dem Laufwagen (6) angeordneten Führungswagen (10, 12) mit dem jeweils von hinten auflaufenden Wagen bei der anschließenden Verschiebebewegung automatisch gekoppelt werden, und mittels derer die nachgeschleppten Führungswagen bei Erreichen ihrer Abstützposition automatisch wieder entkoppelt und in dieser fixiert werden.

## Beschreibung

### Gebiet der Erfindung

Die Erfindung betrifft einen Spindelantrieb, umfassend eine drehantreibbare Gewindespindel, einen mittels der Gewindespindel entlang einer Führungsschiene verstellbaren Laufwagen, sowie mehrere in Richtung der Spindelachse vor und hinter dem Laufwagen angeordnete Führungswagen zum Abstützen der Gewindespindel, wobei die bei einer Zustellbewegung des Laufwagens vor diesem angeordneten Führungswagen durch den Laufwagen nacheinander zusammengeschoben und zu einem Spindelende hin bewegt werden, und wobei die hinter dem Laufwagen angeordneten Führungswagen über einen Kopplungsmechanismus nachgeschleppt und in eine zugeordnete Abstützposition bewegt werden.

### Hintergrund der Erfindung

Derartige Spindelantriebe werden im Maschinenbau vielfach für einen motorischen Antrieb von linear beweglichen Bauteilen, beispielsweise Maschinentischen, Koordinatenmessgeräten und dergleichen verwendet. In dem zu bewegenden Bauteil ist eine Spindelmutter mit einem dem Außengewinde der Gewindespindel entsprechenden Innengewinde angeordnet, die bei einer Drehung der Gewindespindel entlang der Spindelachse fortbewegt wird und das zu bewegende Bauteil mitnimmt.

Die maximale Vorschubgeschwindigkeit des Laufwagens hängt bei einem derartigen Spindelantrieb von der kritischen Drehzahl der Gewindespindel ab. Bei Erreichen der kritischen Drehzahl wird die Gewindespindel in Eigenschwingungen versetzt, die eine präzise Positionierung des Laufwagens erschwert oder unmöglich machen. Maßgebliche Faktoren, die eine kritische Drehzahl bestimmen, sind der Durchmesser der Gewindespindel und insbesondere ihre Länge. Je kleiner das Verhältnis von Durchmesser zu Länge der Gewindespindel ist, desto niedriger liegen die kritische Drehzahl der Gewindespindel und dementsprechend die erreichbare Vorschubgeschwindigkeit. Da insbesondere bei großen Längen der Gewindespindel (z.B. mehrere Meter) der Spindeldurchmesser aus Abmessungs- bzw. Gewichtsgründen nicht beliebig vergrößert werden kann, werden derartige Gewindespindeln zusätzlich in dem Bereich zwischen Laufwagen und Spindelende durch so genannte Führungswagen unterstützt, so dass die Länge der freien, nicht unterstützten Spindelabschnitte verkürzt wird. Die kritische Drehzahl der Gewindespindeln und damit die maximal erreichbare Vorschubgeschwindigkeit des Laufwagens kann auf diese Weise erheblich erhöht werden. Bei einer Vorschubbewegung werden die Führungswagen in dem sich verkürzenden Spindelabschnitt zusammengeschoben und zu dem zugeordneten Spindelende hin bewegt, während die Führungswagen in dem sich verlängernden Spindelabschnitt in ständig angepasster Weise über diese Länge verteilt werden.

Aus der DE 196 36 272 A1 ist ein Spindelantrieb der im Oberbegriff des Anspruchs 1 genannten Art bekannt, bei welchem die dort als Spindelunterstützungseinheiten bezeichneten Führungswagen über Zugseile paarweise miteinander oder über eine flaschenzugartige Verbindung mit dem Laufwagen verbunden sind. Wie ein Blick etwa auf die Fig. 10 dieser Druckschrift erkennen lässt, sind derartige Lösungen konstruktiv und montagetechnisch äußerst aufwendig, da zahlreiche Zugseile zu verlegen und mit den Führungswagen bzw. dem Laufwagen zu verbinden sind. Das gilt insbesondere dann, wenn mehr als zwei Führungswagen vor bzw. hinter dem Laufwagen angeordnet werden sollen, so dass eine derartige Konstruktion mit mehr als zwei Führungswagen nach diesem Prinzip kaum zu verwirklichen ist.

### Aufgabe der Erfindung

Vor diesem Hintergrund liegt der Erfindung die Aufgabe zugrunde, einen Spindelantrieb der im Oberbegriff des Anspruchs 1 genannten Art zu schaffen, welcher konstruktiv einfach sowie zuverlässig ist, und der es ermöglicht, auch mehr als zwei Führungswagen vor bzw. hinter der Gewindespindel anzuordnen.

### Zusammenfassung der Erfindung

Die Lösung dieser Aufgabe ergibt sich aus den Merkmalen des Hauptanspruches, während vorteilhafte Ausgestaltungen und Weiterbildungen der Erfindung den Unteransprüchen entnehmbar sind.

Der Erfindung liegt die Erkenntnis zugrunde, dass insbesondere das Absetzen der nachgeschleppten Führungswagen auf ihren vorgesehenen Abstützpositionen vereinfacht werden kann, wenn es gelingt, dieses Absetzen durch in den Absetzpositionen selbst angeordnete Schaltmittel zu bewerkstelligen.

Demnach geht die Erfindung aus von einem Spindelantrieb, umfassend eine drehantreibbare Gewindespindel, einen mittels der Gewindespindel entlang einer Führungsschiene verstellbaren Laufwagen, sowie mehrere in Richtung der Spindelachse vor und hinter dem Laufwagen angeordnete Führungswagen zum Abstützen der Gewindespindel, wobei die bei einer Vorschub- bzw. Zustellbewegung des Laufwagens vor diesem angeordneten Führungswagen durch den Laufwagen nacheinander zusammengeschoben und zu einem Spindelende hin bewegt werden, und wobei die hinter dem Laufwagen angeordneten Führungswagen über einen Kupplungsmechanismus nachgeschleppt und in eine zugeordnete Abstützposition bewegt werden.

Zur Lösung der gestellten Aufgabe ist dabei vorgesehen, dass an den Führungswagen und am Laufwagen miteinander zusammenwirkende, durch an der Führungsschiene fest angeordnete Schaltmittel betätigbare Kopplungsmittel vorgesehen sind, mittels derer die vor dem Laufwagen angeordneten Führungswagen mit dem jeweils von hinten auflaufenden Wagen bei der anschließenden Verschiebebewegung automatisch gekoppelt werden, und mittels derer die nachgeschleppten Führungswagen bei Erreichen ihrer Abstützposition nacheinander automatisch wieder entkoppelt und abgesetzt werden.

Wenn der Laufwagen beispielsweise aus einer mittleren Position, bei der die Führungswagen jeweils über die vor bzw. hinter dem Führungswagen liegenden Gewindespindelabschnitte gleichmäßig verteilt sind, in einer Vorschubrichtung bewegt wird, läuft er auf den in Vorschubrichtung nächstliegenden ersten Führungswagen auf, wobei die am Laufwagen einerseits und am Führungswagen andererseits angeordneten Kopplungsmittel in eine Kopplungsposition gelangen. Bei der weiteren Vorschubbewegung passiert die aus Laufwagen und Führungswagen gebildete Gruppe die dem Führungswagen zugeordneten Schaltmittel, welche die Kupplungsmittel in Kupplungseingriff bringen.

Bei der weiteren Vorschubbewegung wird in gleicher Weise der erste Führungswagen mit dem folgenden Führungswagen gekoppelt usw., und die zu einem Block zusammengeschobene, aus Laufwagen und den Führungswagen bestehende Gruppe wird in Richtung zum Spindelende hin verschoben.

Bei einer Bewegungsumkehr des Laufwagens werden die gekoppelten Führungswagen mitgeschleppt, wobei, beginnend mit dem dem Laufwagen fernsten Führungswagen alle Führungswagen nacheinander an den zugeordneten Abstützpositionen abgekoppelt und abgesetzt werden.

Für die Kopplungsmittel und die Schaltmittel sind unterschiedliche konstruktive Lösungen möglich. Gemäß einer bevorzugten Ausgestaltung der Erfindung ist vorgesehen, dass an jedem Führungswagen ein erstes Kupplungselement vorhanden ist, welches mit einem an dem bei der Zustellbewegung auflaufenden Führungswagen bzw. Laufwagen angeordneten zweiten Kupplungselement zusammenwirkt. Dabei ist eines der Kupplungselemente einer Kupplungselementepaarung zwischen einer Verriegelungsstellung und einer Entriegelungsstellung schaltbar. Außerdem ist an der Führungsschiene jeweils im Bereich einer Abstützposition eine Schaltrampe oder dergleichen angeordnet, welche das schaltbare Kupplungselement des dieser Abstützposition zugeordneten Führungswagens beim Verschieben aus der Abstützposition heraus in seine Verriegelungsstellung und beim Verschieben in die Abstützposition hinein in seine Entriegelungsstellung schaltet. Das Ankoppeln und Abkoppeln der Führungswagen erfolgt demnach vollautomatisch auf rein mechanische Weise.

Eine andere konstruktive Ausgestaltung der Erfindung sieht vor, dass das zweite Kupplungselement jeweils als ein am Führungswagen bzw. dem Laufwagen fest angeordneter, sich in Zustellrichtung erstreckender Verriegelungsstift ausgebildet ist, welcher in eine Aufnahmebohrung eines zu kuppelnden Führungswagens eindringt. Außerdem ist vorgesehen, dass das erste Kupplungselement als ein quer zur Achse des Verriegelungsstiftes verstellbarer, in eine am Verriegelungsstift ausgebildete Riegelnut eingreifender Riegel ausgebildet ist, welcher über eine daran angeordnete, mit der Schaltrampe zusammenwirkende Schaltnase in Entriegelungsrichtung gegen die Kraft von Federmitteln bewegt wird. Die Federmittel dienen demnach dazu, den Riegel in Richtung der Verriegelungsstellung vorzuspannen.

In weiterer Ausgestaltung der Erfindung ist vorgesehen, dass die Schaltrampe als separate, in eine zugeordnete Ausnehmung an der Innenseite einer Seitenwand der im Querschnitt U-förmigen Führungsschiene einsetzbare Schaltleiste ausgebildet ist. Die Position der Schaltleiste bestimmt demnach die Abstützposition eines zugeordneten Führungswagens.

Um den Führungswagen in seiner Abstützposition zu arretieren, ist gemäß einer weiteren Ausgestaltung der Erfindung an der Schaltleiste eine Rastvertiefung vorgesehen, in die die Schaltnase des zugeordneten Riegels eingreift.

In einer bevorzugten Ausgestaltung des Spindelantriebes weist der Führungswagen ein Gehäuse mit einer Durchführungsöffnung für die Gewindespindel und einer in der Durchführungsöffnung angeordneten, die Gewindespindel aufnehmenden und abstützenden Gleithülse auf, wobei an dem Gehäuse jeweils zumindest eine Aufnahmebohrung für die Aufnahme eines Verriegelungsstiftes, zumindest eine Ausnehmung zur Aufnahme und Führung eines Riegels und ein in Vorschubrichtung abstehender Verriegelungsstift vorgesehen ist, wie anhand eines Ausführungsbeispiels noch näher dargelegt wird.

Vorzugsweise ist das Gehäuse bezüglich einer senkrecht auf der Bodenwand der Führungsschiene stehenden, die Gewindespindelachse enthaltenden Ebene symmetrisch mit je einer zu beiden Seiten der Ebene angeordneten Aufnahmebohrung für einen Verriegelungsstift und je einer Ausnehmung für einen Riegel ausgebildet. Diese konstruktive Ausgestaltung ermöglicht es gemäß einer bevorzugten Ausführungsform der Erfindung, dass vor und hinter dem Laufwagen jeweils eine Gruppe von vier Führungswagen vorgesehen werden kann. Dabei sind die Riegel der vier Führungswagen einer Gruppe so ausgebildet und angeordnet, dass jeweils die Schaltnase eines ersten Führungswagens beispielsweise auf der bezüglich der Zustellrichtung rechten Seite und in einem unteren Bereich des Gehäuses, die Schaltnase eines weiteren Führungswagens auf der rechten Seite im oberen Bereich des Gehäuses, die Schaltnase eines weiteren Führungswagens auf der linken Seite im unteren Bereich und die Schaltnase eines weiteren Führungswagens auf der linken Seite im oberen Bereich des Gehäuses angeordnet ist, wobei vier Schaltleisten dementsprechend an der Innenseite der rechten bzw. linken Seitenwand der Führungsschiene in einer der Lage der Schaltnasen entsprechenden Höhe angeordnet sind.

### Kurze Beschreibung der Zeichnungen

Die Erfindung lässt sich anhand eines Ausführungsbeispiels weiter erläutern. Dazu ist der Beschreibung eine Zeichnung beigefügt. In dieser zeigt
Fig. 1 in einer perspektivischen, teilweise geschnittenen Darstellung einen Endabschnitt einer Führungsschiene mit einem Laufwagen und zwei bezüglich der Vorschubrichtung vor diesem angeordneten, miteinander und mit dem Laufwagen nicht gekoppelten Führungswagen, und zwar in einer Ansicht bezüglich der Vorschubrichtung von links vorne,
Fig. 2 den Laufwagen und die Führungswagen gemäß der Fig. 1 in miteinander gekoppeltem Zustand,
Fig. 3 den Laufwagen und den diesem benachbarten Führungswagen gemäß der Fig. 2 in vergrößerter Darstellung,
Fig. 4 die Anordnung gemäß der Fig. 2 in einer Ansicht bezüglich der Vorschubrichtung von rechts vorne,
Fig. 5 den dem Laufwagen benachbarten Führungswagen gemäß der Fig. 4 von rechts hinten in vergrößerter Darstellung mit einem bezüglich der Vorschubrichtung links wirkenden Riegel,
Fig. 6 den Führungswagen gemäß der Fig. 5 mit einer zugeordneten Schaltleiste,
Fig. 7 und Fig. 8 den dem Laufwagen fernen Führungswagen gemäß der Fig. 4 in Darstellungen etwa gemäß den Figuren 5 und 6,
Fig. 9 eine Explosionsansicht des Führungswagens gemäß den Figuren 7 und 8, und
Fig. 10 eine teilweise geschnittene Darstellung einer Führungsschiene mit darin angeordneten Schaltleisten.

### Detaillierte Beschreibung der Zeichnungen

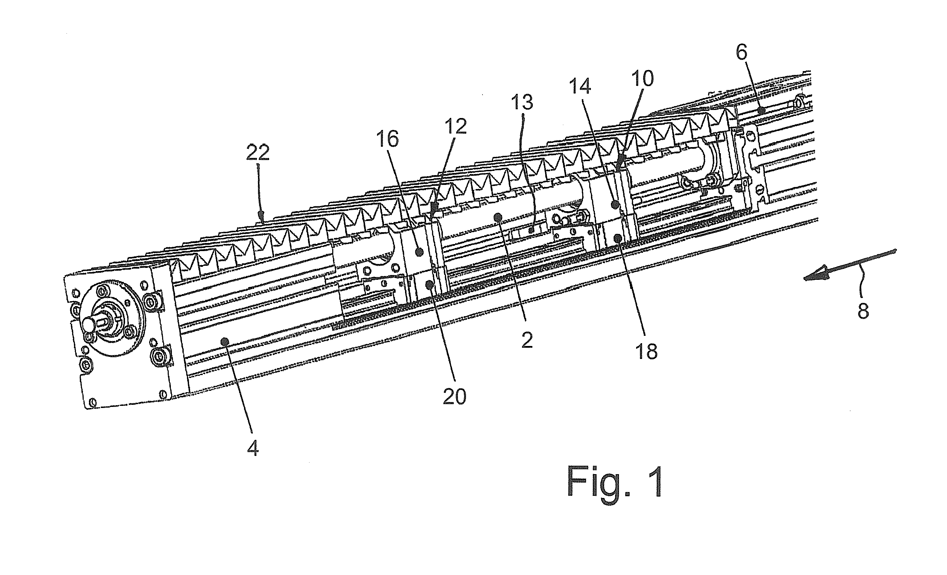

Der in Fig. 1 dargestellte Spindelantrieb umfasst eine drehantreibbare Gewindespindel 2, einen mittels der Gewindespindel 2 entlang einer Führungsschiene 4 verstellbaren, beispielsweise einen Maschinentisch tragenden Laufwagen 6 sowie zwei entlang der Gewindespindel 2 bezüglich einer angenommenen Vorschubrichtung 8 vor dem Laufwagen 6 angeordnete Führungswagen 10 bzw. 12 zum Abstützen der Gewindespindel 2, wobei die Führungswagen 10, 12 in diesem Ausführungsbeispiel jeweils ein oberes, die Gewindespindel 2 aufnehmendes Gehäuse 14 bzw. 16 sowie eine untere, auf der Führungsschiene geführte Langzeitschmiereinheit 18 bzw. 20 umfassen. Der Spindelantrieb ist oben durch einen Balg 22 abgedeckt und geschützt.

Wenn der Laufwagen 6 in Vorschubrichtung 8 bewegt wird, wird er zuerst mit dem ihm nächstliegenden Führungswagen 10 automatisch gekoppelt. Bei einer weiteren Vorschubbewegung wird dann der erste Führungswagen 10 mit dem zweiten Führungswagen 12 automatisch gekoppelt, und die gesamte, aus Laufwagen 6 und den Führungswagen 10, 12 bestehende Gruppe bewegt sich weiter in Richtung zum Spindelende hin.

Es sei hier bemerkt, dass aus Gründen einer besseren Übersichtlichkeit nur zwei Führungswagen der vor dem Laufwagen 6 vorgesehenen Gruppe dargestellt sind, diese jedoch ohne weiteres mehr als zwei enthalten kann, wie noch dargelegt wird.

Bei einer Bewegungsumkehr des Führungswagens, d.h. entgegen der mit 8 bezeichneten Vorschubrichtung, bewegt sich die Gruppe bis zu der in Fig. 1 dargestellten Abstützposition des zweiten Führungswagens 12, wo dieser automatisch abgekoppelt wird. Sodann bewegt sich die aus Laufwagen 6 und Führungswagen 10 bestehende Gruppe bis zur dargestellten Abstützposition des ersten Führungswagens 10, wo dieser ebenfalls automatisch abgekoppelt wird. Bei der weiteren Bewegung des Laufwagens 6 läuft dieser auf die in Fig. 1 nicht dargestellten, auf der anderen Seite des Laufwagens 6 angeordneten Führungswagen auf und nimmt sie in analoger Weise aus ihrer jeweiligen Abstützposition in Richtung des anderen Spindelendes mit, wie vorstehend ausgeführt wurde. Die Kopplung und Entkopplung erfolgt mittels an der Führungsschiene angeordneter Schaltmittel 13, wie noch erläutert wird.

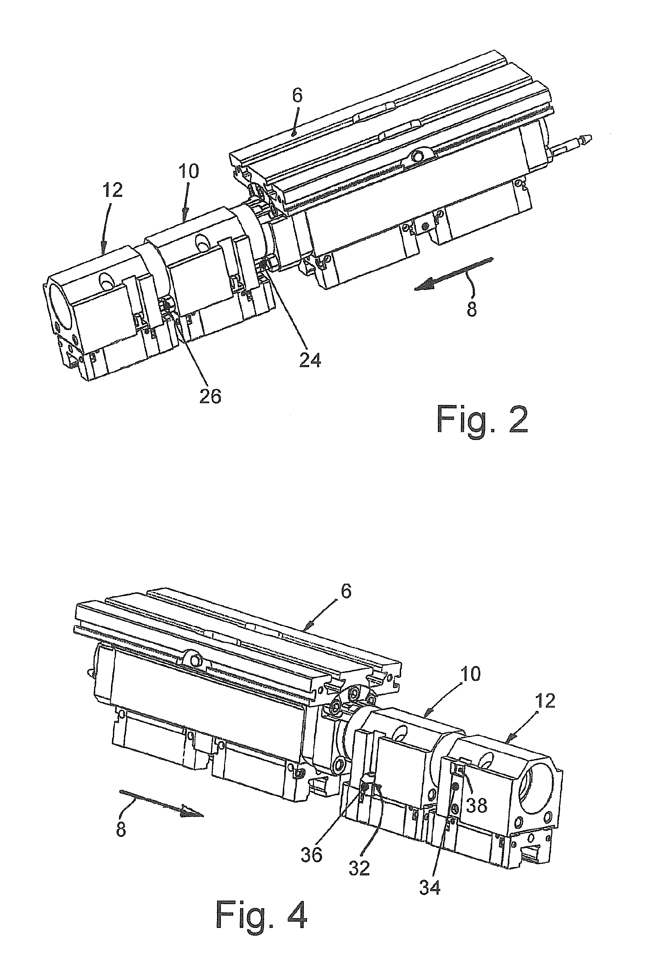

Fig. 2 zeigt den Laufwagen 6 und die mit diesem gekoppelten Führungswagen 10 und 12. Die Kopplungsmittel zum Ankoppeln des ersten Führungswagens 10 am Laufwagen 6 umfassen ein erstes, am Führungswagen 10 angeordnetes, in Fig. 2 nicht dargestelltes Kupplungselement, welches mit einem zweiten, am Laufwagen 6 angeordneten Kupplungselement 24 zusammenwirkt, wie weiter unten im Einzelnen beschrieben wird. In ähnlicher Weise umfassen die Kopplungsmittel zum Ankoppeln des zweiten Führungswagens 12 am ersten Führungswagen 10 ein am zweiten Führungswagen 12 angeordnetes, nicht dargestelltes erstes Kupplungselement, welches mit einem am ersten Führungswagen 10 angeordneten zweiten Kupplungselement 26 zusammenwirkt. Die in Fig. 2 nicht dargestellten ersten Kupplungselemente werden durch an der Führungsschiene angeordnete Schaltmittel 13 (siehe Fig. 1) zwischen einer Verriegelungsstellung und einer Entriegelungsstellung geschaltet, wie noch ausgeführt wird.

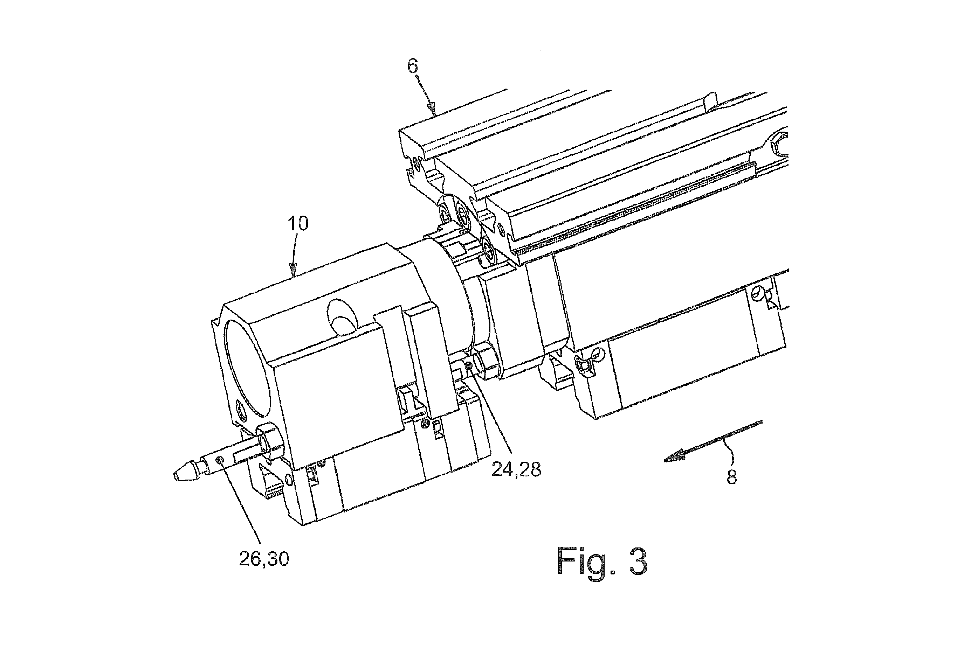

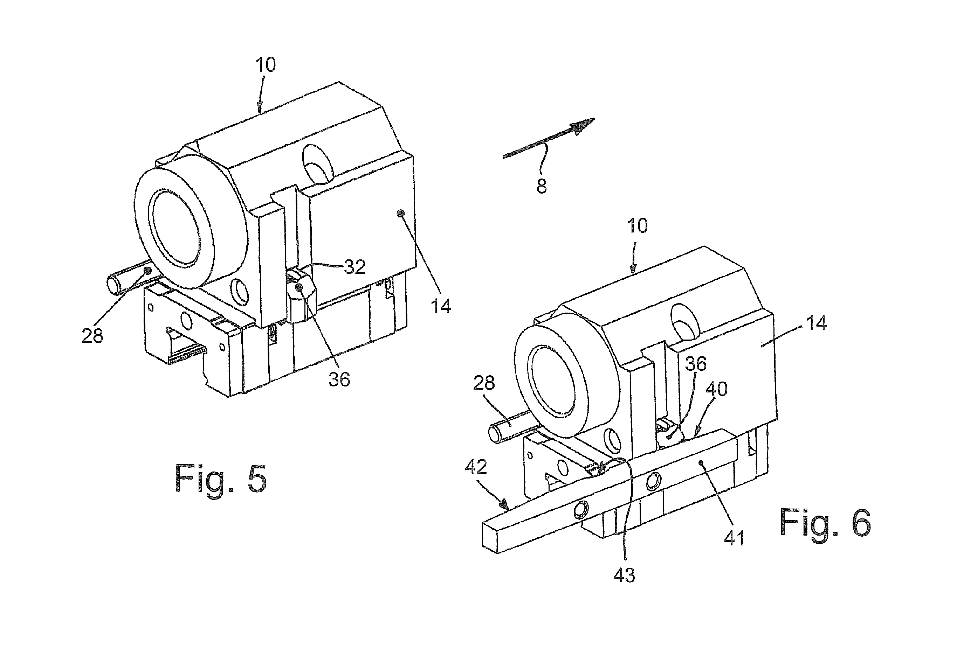

Fig. 3 zeigt wiederum den Laufwagen 6 und den ersten Führungswagen 10. Wie die Fig. 3 erkennen lässt, besteht das am Laufwagen 6 angeordnete zweite Kupplungselement 24 aus einem Verriegelungsstift 28, welcher beim Auflaufen des Laufwagens 6 auf den Führungswagen 10 in eine am Führungswagen 10 ausgebildete Aufnahmebohrung eindringt und dort mit einem anhand der Figuren 5 bis 9 näher erläuterten ersten Kupplungselement verriegelt wird. In der gleichen Weise besteht das am ersten Führungswagen 10 angeordnete zweite Kupplungselement 26 aus einem Verriegelungsstift 30, welcher in eine am nicht dargestellten zweiten Führungswagen ausgebildete Aufnahmebohrung eindringt und dort verriegelt wird.

Fig. 4 zeigt die Anordnung gemäß der Fig. 2 in einer Ansicht - bezüglich der Vorschubrichtung 8 - von rechts. Hier sind die als quer zur Vorschubrichtung beweglich an den Führungswagen 10, 12 angeordneten, mit den Verriegelungsstiften 28 bzw. 30 zusammenwirkenden Riegel 32 bzw. 34 zu erkennen, welche die vorne erwähnten ersten Kupplungselemente darstellen. Die Riegel 32, 34 werden, wie weiter vorne bereits ausgeführt wurde, über an diesen ausgebildete Schaltnasen 36 bzw. 38 von Schaltrampen betätigt, die an der Führungsschiene 4 im Bereich der jeweiligen zugeordneten Abstützpositionen angeordnet sind.

Fig. 5 zeigt den Führungswagen 10 in vergrößerter Darstellung. Zu erkennen ist der am nicht dargestellten Laufwagen angeordnete, in eine Aufnahmebohrung des Führungswagens 10 eingreifende Verriegelungsstift 28, welcher durch eine Verstellung des Riegels 32 mittels dessen Schaltnase 36 quer zur Längsachse des Verriegelungsstiftes 28 verriegelt bzw. entriegelt wird, wodurch der Führungswagen 10 mit dem Laufwagen 6 gekoppelt bzw. entkoppelt wird. Wie die Figuren 5 und 6 zeigen, ist die Schaltnase 36 auf der bezüglich der Vorschubrichtung 8 rechten Seite sowie in einem unteren Bereich des Gehäuses 14 angeordnet und wirkt mit einer in einer entsprechenden Position an der Führungsschiene befestigten Schaltrampe 40 zusammen, die an einer an der Führungsschiene befestigten Schaltleiste 41 ausgebildet ist.

Wenn der Führungswagen 10 in Vorschubrichtung 8 aus seiner Abstützposition, bei der die Schaltnase 36 in der Rastvertiefung 43 der Schaltleiste 41 eingerastet ist, mitgenommen wird, dann wird die Schaltnase 36 aus der Rastvertiefung geschoben und gleitet an der Schaltrampe 40 entlang. Dabei wird der Riegel 32 durch Federmittel 56 in seine Verriegelungsstellung verstellt und der Führungswagen 10 mit dem Laufwagen 6 gekoppelt. Bei einer Bewegung in Gegenrichtung läuft die Schaltnase 36 des vom Laufwagen 6 geschleppten Führungswagens 10 auf die Schaltrampe 40 auf, wobei der Riegel 32 entriegelt wird, und rastet in die Rastvertiefung 43 ein, so dass der Führungswagen in seiner Abstützposition verbleibt.

Die an der Schaltleiste 41 außerdem ausgebildete und in Fig. 6 erkennbare Schaltrampe 42 schaltet in analoger Weise die Kupplungsmittel an einem auf der anderen Seite des Laufwagens 6 angeordneten Führungswagen 10, welcher dann die durch den Führungswagen 10 freigemachte Abstützposition einnimmt, wie nicht im einzelnen dargelegt zu werden braucht.

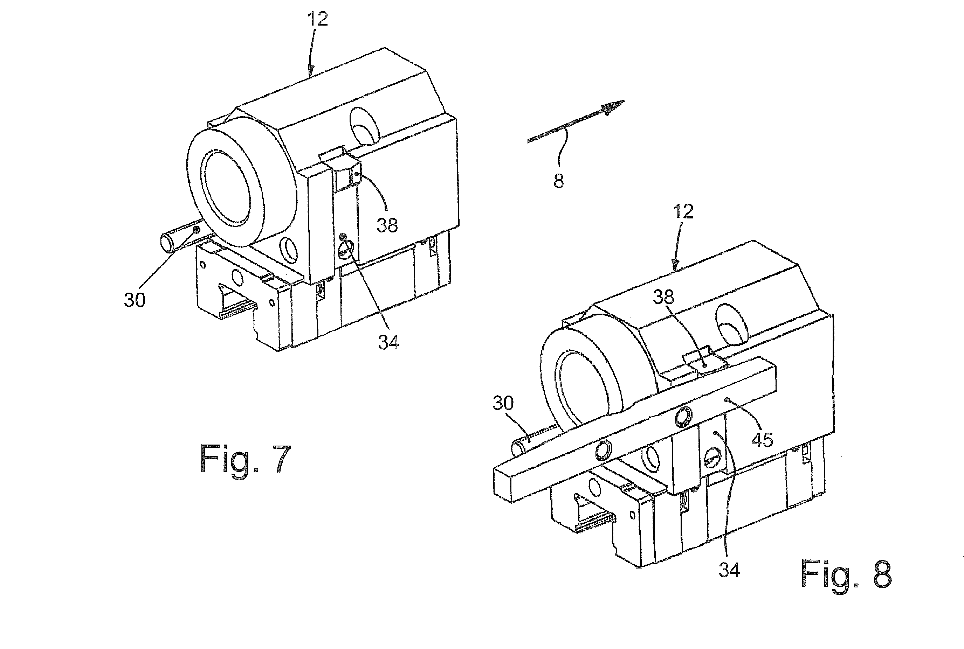

Die Figuren 7 und 8 zeigen in einer Darstellung ähnlich den Figuren 5 und 6 den Führungswagen 12, der sich vom Führungswagen 10 im wesentlichen nur dadurch unterscheidet, dass die Schaltnase 38 des Riegels 34 auf der rechten Seite im oberen Bereich des Gehäuses 14 des Führungswagens 12 angeordnet ist und mit einer entsprechend in der Führungsschiene angeordneten Schaltleiste 45 zusammenwirkt, um den Riegel 34 mit dem zugeordneten Verriegelungsstift 30 zu verriegeln bzw. zu entriegeln.

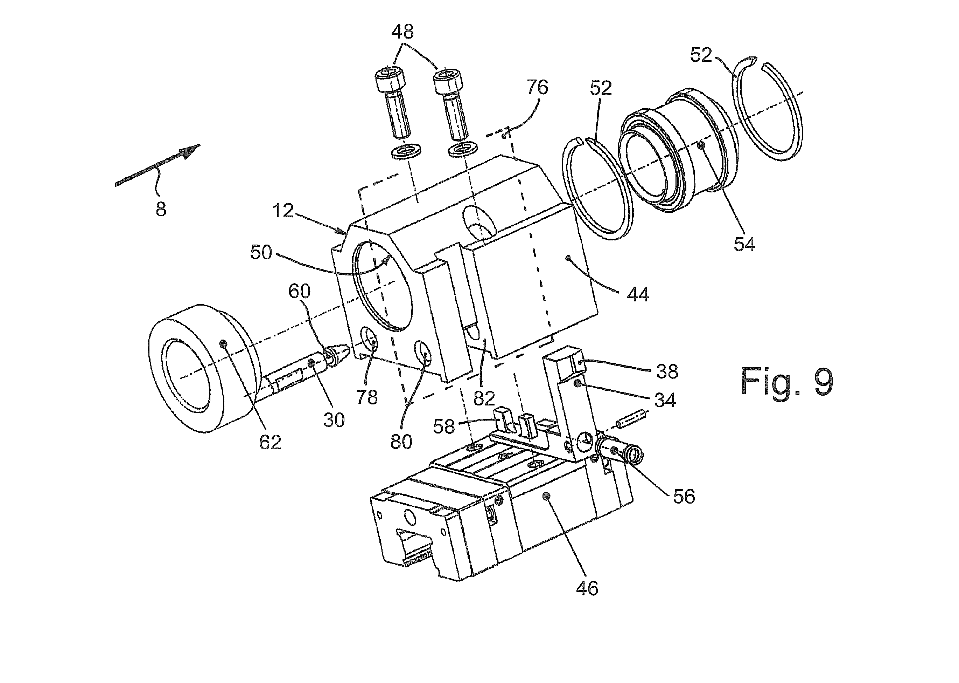

Fig. 9 zeigt den Führungswagen 12 in einer Explosionsdarstellung. Zu erkennen sind ein Gehäuse 44, eine Langzeitschmiereinheit 46, die über Schraubbolzen 48 mit dem Gehäuse 44 verbunden wird, ferner eine in einer Durchführungsöffnung 50 des Gehäuses 44 angeordnete, durch Sprengringe 52 axial gesicherte, beispielsweise mit einem Innengewinde versehene und drehbar gelagerte Gleithülse 54 zum Abstützen der nicht dargestellten Gewindespindel, und den im Gehäuse 44 quer zur Vorschubrichtung 8 verstellbaren Riegel 34 mit seiner Schaltnase 38. Wie bereits erläutert, bewirkt eine Verschiebung des Riegels 34 durch die Federmittel 56 bezüglich der Vorschubrichtung nach rechts eine Verriegelung mit dem Verriegelungsstift 30. Dabei greifen am Riegel 34 angeordnete Riegelvorsprünge 58 in eine am Verriegelungsstift 30 ausgebildete Riegelnut 60 ein. Eine Bewegung des Riegels 34 in der Gegenrichtung führt zu seiner Entriegelung.

Mit 62 ist ein Dämpfungselement bezeichnet, welches das Auflaufen des Laufwagens auf den Führungswagen dämpft. Entsprechende Dämpfungselemente sind am axialen Ende aller Führungswagen vorgesehen.

Wie in Fig. 9 weiter zu erkennen ist, ist das Gehäuse 44 bezüglich einer Symmetrieebene 76 symmetrisch aufgebaut, d.h. es weist beiderseits der Symmetrieebene 76 jeweils eine Aufnahmebohrung 78, 80 zur Aufnahme eines Verriegelungsstiftes sowie jeweils eine Ausnehmung (von der nur eine Ausnehmung 82 zu sehen ist) auf, um vier Verriegelungskonstellationen und damit Gruppen mit vier Führungswagen möglich zu machen, d.h. links wirkende und rechts wirkende Riegel jeweils mit Schaltnase oben und Schaltnase unten.

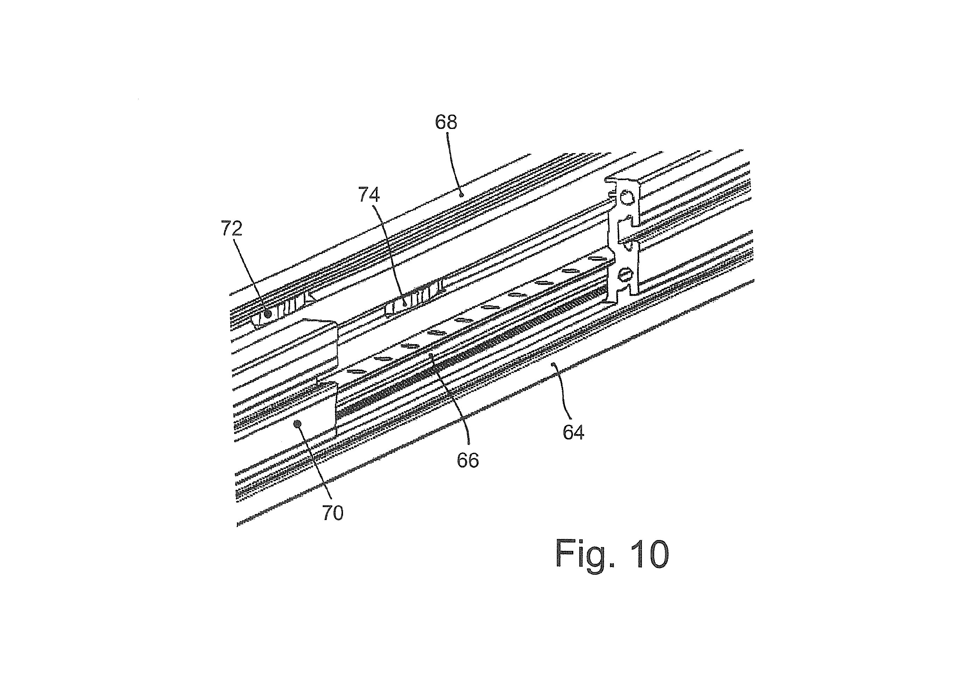

Fig. 10 zeigt eine im Querschnitt etwa U-förmige Führungsschiene 64 mit einer Bodenwand 66 und zwei Seitenwänden 68, 70, von denen die dem Betrachter zugewandte Seitenwand 70 aufgeschnitten ist. Man erkennt an der Seitenwand 68 zwei Schaltleisten 72 und 74, wobei die Schaltleiste 72 entsprechend einer oben angeordneten Schaltnase eines Riegels höher und die Schaltleiste 74 entsprechend einer unten angeordneten Schaltnase eines Riegels tiefer angeordnet ist.

### Bezugszeichen

- 2: Gewindespindel
- 4: Führungsschiene
- 6: Laufwagen
- 8: Vorschubrichtung
- 10: Führungswagen
- 12: Führungswagen
- 13: Schaltmittel
- 14: Gehäuse
- 16: Gehäuse
- 18: Langzeitschmiereinheit
- 20: Langzeitschmiereinheit
- 22: Balg
- 24: Kupplungselement
- 26: Kupplungselement
- 28: Verriegelungsstift
- 30: Verriegelungsstift
- 32: Riegel
- 34: Riegel
- 36: Schaltnase
- 38: Schaltnase
- 40: Schaltrampe
- 41: Schaltleiste
- 42: Schaltrampe
- 43: Rastvertiefung
- 44: Gehäuse
- 45: Schaltleiste
- 46: Langzeitschmiereinheit
- 48: Schraubbolzen
- 50: Durchführungsöffnung
- 52: Sprengringe
- 54: Gleithülse
- 56: Federmittel
- 58: Riegelvorsprünge
- 60: Riegelnut
- 62: Dämpfungselement
- 64: Führungsschiene
- 66: Bodenwand
- 68: Seitenwand
- 70: Seitenwand
- 72: Schaltleiste
- 74: Schaltleiste
- 76: Symmetrieebene
- 78: Aufnahmebohrung
- 80: Aufnahmebohrung
- 82: Ausnehmung

## Patentansprüche

1. Spindelantrieb, umfassend eine drehantreibbare Gewindespindel (2), einen mittels der Gewindespindel entlang einer Führungsschiene (4) verstellbaren Laufwagen (6), sowie mehrere in Richtung der Spindelachse vor und hinter dem Laufwagen (6) angeordnete Führungswagen (10, 12) zum Abstützen der Gewindespindel (2), wobei die bei einer Zustellbewegung des Laufwagens (6) vor diesem angeordneten Führungswagen (10, 12) durch den Laufwagen nacheinander zusammengeschoben und zu einem Spindelende hin bewegt werden, und wobei die hinter dem Laufwagen (6) angeordneten Führungswagen (10, 12) über einen Kopplungsmechanismus nachgeschleppt und in eine zugeordnete Abstützposition bewegt werden, **dadurch gekennzeichnet, dass** an den Führungswagen (10, 12) und am Laufwagen (6) miteinander zusammenwirkende, durch an der Führungsschiene (4) fest angeordnete Schaltmittel (13) betätigbare Kopplungsmittel vorgesehen sind, mittels derer die vor dem Laufwagen (6) angeordneten Führungswagen (10, 12) mit dem jeweils von hinten auflaufenden Wagen bei der anschließenden Verschiebebewegung automatisch gekoppelt werden, und mittels derer die nachgeschleppten Führungswagen bei Erreichen ihrer Abstützposition automatisch entkoppelt und abgesetzt werden.

2. Spindelantrieb nach Anspruch 1, **dadurch gekennzeichnet, dass** an jedem Führungswagen (10, 12) ein erstes Kupplungselement (Riegel 32, 34) vorgesehen ist, welches mit einem an dem bei der Zustellbewegung auflaufenden Führungswagen (10) bzw. Laufwagen (6) angeordneten zweiten Kupplungselement (24, 26) zusammenwirkt, wobei eines der Kupplungselemente einer Kupplungselementepaarung zwischen einer Verriegelungsstellung und einer Entriegelungsstellung schaltbar ist, und dass an der Führungsschiene (4) jeweils im Bereich einer Abstützposition eine Schaltrampe (40) oder dergleichen angeordnet ist, welche das schaltbare Kupplungselement (Riegel 32, 34) des dieser Abstützposition zugeordneten Führungswagens (10, 12) beim Verschieben aus der Abstützposition heraus in seine Verriegelungsstellung und beim Verschieben in die Abstützposition hinein in seine Entriegelungsstellung schaltet.

3. Spindelantrieb nach Anspruch 2, **dadurch gekennzeichnet, dass** das zweite Kupplungselement (24, 26) als am Führungswagen (10, 12) bzw. im Laufwagen (6) fest angeordneter, sich in Zustellrichtung erstreckender Verriegelungsstift (28, 30) ausgebildet ist, welcher in eine Aufnahmebohrung (78, 80) eines zu kuppelnden Führungswagens eindringt, und dass das erste Kupplungselement als quer zur Achse des Verriegelungsstiftes (28, 30) verstellbarer, in eine am Verriegelungsstift (28, 30) ausgebildeten Riegelnut (60) eingreifender Riegel (32, 34) ausgebildet ist, welcher über eine daran angeordnete, mit der Schaltrampe (40) zusammenwirkende Schaltnase (36, 38) in Entriegelungsrichtung betätigt wird.

4. Spindelantrieb nach Anspruch 3, **dadurch gekennzeichnet, dass** der Riegel (32, 34) durch Federmittel (56) in Richtung seiner Verriegelungsstellung vorgespannt ist.

5. Spindelantrieb nach Anspruch 3 oder 4, **dadurch gekennzeichnet, dass** die Schaltrampe (40) an einer separaten, in eine zugeordnete Ausnehmung an der Innenseite einer Seitenwand (68, 70) der im Querschnitt U-förmigen Führungsschiene (4) einsetzbaren Schaltleiste (41) ausgebildet ist.

6. Spindelantrieb nach Anspruch 5, **dadurch gekennzeichnet, dass** an der Schaltleiste (41) eine Rastvertiefung (43) zur Aufnahme der Schaltnase (36) des zugeordneten Riegels (32) ausgebildet ist.

7. Spindelantrieb nach einem der Ansprüche 1 bis 6, **dadurch gekennzeichnet, dass** der Führungswagen (12) ein Gehäuse (44) mit einer Durchführungsöffnung (50) für die Gewindespindel (2) und einer in der Durchführungsöffnung (50) angeordneten, die Gewindespindel (2) aufnehmenden und abstützenden Gleithülse (54) aufweist, und dass an dem Gehäuse (44) jeweils zumindest eine Aufnahmebohrung (78, 80) für die Aufnahme eines Verriegelungsstiftes (30), zumindest eine Ausnehmung (82) zur Aufnahme und Führung eines Riegels (34) sowie ein in Vorschubrichtung abstehender Verriegelungsstift (30) vorgesehen ist.

8. Spindelantrieb nach Anspruch 7, **dadurch gekennzeichnet, dass** das Gehäuse (44) bezüglich einer senkrecht auf der Bodenwand der Führungsschiene stehenden, die Gewindespindelachse enthaltenden Symmetrieebene (76) symmetrisch mit je einer zu beiden Seiten der Ebene angeordneten Aufnahmebohrung (78, 80) für einen Verriegelungsstift und je einer Ausnehmung (82) für einen Riegel mit oben bzw. unten angeordneter Schaltnase ausgebildet ist.

9. Spindelantrieb nach Anspruch 7 oder 8, **dadurch gekennzeichnet, dass** vor und hinter dem Laufwagen (6) jeweils eine Gruppe von vier Führungswagen (10, 12) vorgesehen ist, wobei die Riegel der vier Führungswagen einer Gruppe so ausgebildet und angeordnet sind, dass jeweils eine Schaltnase auf der bezüglich der Vorschubrichtung rechten Seite und in einem oberen Bereich des Gehäuses, eine Schaltnase auf der rechten Seite im unteren Bereich des Gehäuses, eine Schaltnase auf der linken Seite im oberen Bereich und eine Schaltnase auf der linken Seite im unteren Bereich des Gehäuses angeordnet ist, wobei die Schaltrampen dementsprechend an der Innenseite der rechten Seitenwand bzw. linken Seitenwand in einer der Lage der Schaltnasen entsprechenden Höhe angeordnet sind.
